Europäisches Patentamt

European Patent Office

Office européen des brevets

(19)

(11) **EP 1 409 306 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(51) Int Cl.7: **B60T 1/00**

(86) Internationale Anmeldenummer:
**PCT/EP2002/007830**

(21) Anmeldenummer: **02784857.1**

(22) Anmeldetag: **15.07.2002**

(87) Internationale Veröffentlichungsnummer:
**WO 2003/006283 (23.01.2003 Gazette 2003/04)**

(54) **VERFAHREN UND VORRICHTUNG ZUM DETEKTIEREN VON RESTDRUCK IN EINEM BREMSSYSTEM, INSBESONDERE IN EINEM BREMSZYLINDER**

METHOD AND DEVICE FOR DETECTING RESIDUAL PRESSURE IN A BRAKING SYSTEM, IN PARTICULAR IN A BRAKING CYLINDER

PROCEDE ET DISPOSITIF POUR DETECTER UNE PRESSION RESIDUELLE DANS UN SYSTEME DE FREINAGE, EN PARTICULIER DANS UN CYLINDRE DE FREIN

(84) Benannte Vertragsstaaten:
**AT BE BG CH CY CZ DE DK EE ES FI FR GB GR IE IT LI LU MC NL PT SE SK TR**

(30) Priorität: **13.07.2001 DE 10134153**

(43) Veröffentlichungstag der Anmeldung:
**21.04.2004 Patentblatt 2004/17**

(73) Patentinhaber: **KNORR-BREMSE SYSTEME FÜR NUTZFAHRZEUGE GMBH**
**80809 München (DE)**

(72) Erfinder: **SEICHE, Andreas**
**70839 Gerlingen (DE)**

(74) Vertreter: **Schönmann, Kurt, Dr.**
**Knorr-Bremse AG**
**Moosacher Strasse 80**
**80809 München (DE)**

(56) Entgegenhaltungen:
**EP-A- 0 795 449          WO-A-97/32769**
**DE-A- 3 416 744          DE-A- 3 501 179**

**Beschreibung**

Die vorliegende Erfindung betrifft ein Verfahren zum Detektieren von Restdruck in einem Bremssystem, insbesondere in einem Bremszylinder gemäß dem Patentanspruch 1.

Bei konventionellen Bremssystemen kann Restdruck nicht vom Bremssystem erkannt werden. Jedoch kann bereits ein geringer Restdruck zum Anlegen der Bremse führen, ohne dass für den Fahrer eine spürbare Bremswirkung entsteht Durch eine angelegte bzw. "schleifende" Bremse kann es zu Überhitzung und im schlimmsten Fall zum vollständigen Ausfall der Bremse fuhren. Einen Defekt kann der Fahrer in der Regel nur bei einer spürbaren Bremswirkung erkennen, wobei dann häufig bereits eine starke Beschädigung der Bremse vorausgegangen ist.

Bei einer elektronisch gesteuerten Druckluftbremse (EBS) für Nutzfahrzeuge wird ein Druck-Sollwert unter Vorschaltung eines Druckregelmoduls in einen Bremszylinder eingeregelt. Dies geschieht dadurch, dass ein Steuerdruck mittels zweier Magnetventile in eine Steuerkammer des Druckregelmoduls eingeregelt wird. Durch ein Einlassventil kann die Steuerkammer mit Vorratsdruck beaufschlagt werden, was zu einer Belüftung der Steuerkammer führt. Durch ein Auslassventil kann die Steuerkammer mit Atmosphäre, d.h. mit der Umgebung verbunden werden, um eine Entlüftung der Steuerkammer und somit ein Lösen der Bremse zu erreichen. Durch einen Relaiskolben wird ein Druck in die Arbeitskammer eingesteuert, der ungefähr dem Druck in der Steuerkammer entspricht. Die Arbeitskammer ist mit dem Bremszylinder verbunden. Die Steuerkammer kann durch Öffnen eines dritten Magnetventils; das als Back-up-Ventil bezeichnet wird, mit Bremsdruck eines im Rückhalt vorhandenen konventionellen Bremssystem verbunden werden. Der Istdruck in der Arbeitskammer wird mit einem Drucksensor sensiert. Die Bremselektronik überwacht eine ggf. vorhandene Abweichung zwischen dem Istdrucksignal und dem vorgegebenen Solldruck und steuert entsprechend das Einlassventil bzw. das Auslassventil an. In ungebremstem Zustand sind das Einlassventil und das Auslassventil geschlossen und das Back-up-Ventil geöffnet.

Durch diverse Störeinflüsse bzw. Fehler in der Bremsanlage kann auch, wenn der Fahrer das Bremspedal nicht betätigt, ein Restdruck im Bremssystem verbleiben bzw. entstehen. Der Restdruck kann beispielsweise durch ein undichtes Einlassventil hervorgerufen werden, wodurch sich in der Steuerkammer ein Staudruck aufbaut, der über das Back-up-Ventil nicht vollständig entlüftet werden kann. Eine weitere Ursache kann ein Defekt des "im Rückhalt" vorhandenen konventionellen Bremssystems sein, wobei dann ggf. über das Back-up-Ventil ein Druck in der Steuerkammer aufgebaut werden kann.

Aufgabe der Erfindung ist es, ein Verfahren bzw. eine Vorrichtung zur Detektierung von Restdruck in einem Bremssystem, insbesondere in der Arbeitskammer eines Bremszylinders anzugeben.

Diese Aufgabe wird durch die in den Patentansprüchen 1 und 13 angegebenen Merkmale gelöst. Vorteilhafte Ausgestaltungen und Weiterbildungen der Erfindung sind den Unteransprüchen zu entnehmen.

Das Grundprinzip der Erfindung besteht darin, durch kontinuierliche "grobe" Überwachung des Drucks im Bremssystem festzustellen, ob ein Verdacht auf Restdruck besteht. Wurde ein solcher Restdruckverdacht festgestellt, so erfolgt ggf. mehrfach wiederholend eine Feinüberwachung, wobei ein Druckentlastungsorgan des Bremssystems geöffnet wird und sensiert wird, ob und ggf. wie stark der sensierte Istdruck absinkt.

Diese grundsätzliche Differenzierung zwischen Grobüberwachung und Feinüberwachung ist erforderlich, da das Ausgangssignal des Drucksensors allein nicht ausreicht, um einen Restdruck, d.h. einen Fehler im Bremssystem zuverlässig zu detektieren, wenn ein sog. "adaptiver Offset-Abgleich" erfolgt. Bei nicht betätigter, d.h. gelöster Bremse hängt der Druck im Bremssystem bzw. das Ausgangssignal des Drucksensors von verschiedenen Einflussgrößen ab, wie z.B. der Umgebungstemperatur, der Höhe bzw. dem Atmosphärendruck. Außerdem kann zuweilen durch bestimmte Einflüsse befristet Unterdruck in der Arbeitskammer entstehen.

Das "Null-Druckniveau" (Offset) einer intakten Bremsanlage kann somit aufgrund der o.g. Störeinflüsse in einer gewissen Bandbreite schwanken. Es muss somit ein "Offset-Abgleich" durchgeführt werden, d.h. das Null-Druckniveau muss an den jeweiligen Umgebungszustand adaptiert werden.

Durch Betätigen des Auslassventils und Auswertung (Filterung) der Drucksensor-Spannung ist eine Restdruckerkennung möglich. Zu einem Zeitpunkt, bei dem kein Restdruck vorhanden ist, wird eine Drucksensor-Spannung als Bezugsspannung gespeichert. Hierzu wird in einer Initialisierungsphase das Auslassventil geöffnet. Während des Betriebs kann sich die Drucksensor-Spannung, d.h. das im Bremssystem vorhandene Druckniveau in Abhängigkeit von verschiedenen Einflüssen ändern. Durch ständige Auswertung des (gefilterten) Verlaufs der Drucksensor-Spannung und Vergleich mit der Bezugsspannung, die einem Zustand ohne Restdruck entspricht, kann ein Verdacht auf Restdruck festgestellt werden. Durch eine weitere Betätigung des Auslassventils kann erkannt werden, ob tatsächlich ein Überdruck im Bremssystem vorhanden ist, d.h. ob ein Restdruck entlüftbar ist. Falls bei der erneuten Betätigung des Auslassventils keine Entlüftung stattfindet, wird angenommen, dass sich das Null-Druckniveau verschoben hat, und die Bezugsspannung wird entsprechend angepasst. Findet hingegen bei einer ggf. mehrfach hintereinander erfolgenden Betätigung des Auslassventils jeweils eine Restdruckentlüftung statt, so ist von einer Störung im Bremssystem auszugehen.

Konkret werden bei der Restdrucküberwachung folgende Schritte durchgeführt:

- Sensieren des Istdrucks im Bremssystem und Erzeugen eines entsprechenden Istdrucksignals;

- während einer Initialisierungsphase

  - Öffnen des Druckentlastungsorgans
  - Schließen des Druckentlastungsorgans und Speichern des beim Schließen gemessenen Istdrucks als Bezugsdrucksignal;

- Erzeugen eines Adaptivdrucksignals, dessen Signalverlauf durch ständiges Filtern des Verlaufs des Istdrucksignals gebildet wird, wobei beim Schließen des Druckentlastungsorgans das Adaptivdrucksignal auf einen Anfangswert festgesetzt wird, der gleich dem des Istdrucksignals ist;

- Überwachen der Differenz zwischen dem Bezugsdrucksignal und dem Adaptivdrucksignal und erneutes Öffnen des Druckentlastungsorgans, wenn die Differenz größer als ein vorgegebener Grenzwert ist;

- Speichern des beim erneuten Öffnen gemessenen Istdrucks als Startdrucksignal;

- Feststellen, dass

- kein Restdruck vorhanden ist, wenn nach dem erneuten Öffnen gilt:
Istdrucksignal > Startdrucksignal - Grenzwert bzw.

- ein Restdruck vorhanden ist, wenn nach dem erneuten Öffnen gilt:
Istdrucksignal < Startdrucksignal - Grenzwert.

Das Adaptivdrucksignal wird durch Filterung des Istdrucksignals gebildet. Der Verlauf des Adaptivdrucksignals entspricht qualitativ, d.h. "grob" dem Istdrucksignal, wobei beispielsweise, wenn das Istdrucksignal steigt, auch das Adaptivdrucksignal steigt und umgekehrt. Hierbei können eine oder mehrere funktionale oder relationale "Filtervorschriften" vorgegeben sein.

Wenn bei der Grobüberwachung das Adaptivdrucksignal und das Bezugsdrucksignal auseinanderlaufen und eine vorgegebene Differenz (Grenzwert) überschritten wird, besteht der Verdacht, dass im Bremssystem ein Restdruck entstanden ist. Bei Verdacht auf Restdruck wird eine Feinüberwachung durchgeführt.

Hierzu wird ein "Auslassventil" des Bremssystems betätigt, so dass ein ggf. vorhandener Überdruck entweichen kann. Findet kein "merklicher" Druckabfall statt, so wird davon ausgegangen, dass das Bremssystem in Ordnung ist und sich lediglich Umgebungsbedingungen, wie z.B. Temperatur, Atmosphärendruck etc., geändert haben. Folglich wird beim Schließen des Entlüftungsventils das Bezugsdruckniveau entsprechend den "neuen Normalbedingungen" geändert, d.h. das Bezugsdruckniveau wird auf das Niveau des aktuell gemessenen Istdrucks gesetzt. Auf dieses Druckniveau wird auch der "neue Anfangswert" für das Adaptivdrucksignal gesetzt.

Ist hingegen im Bremssystem ein Überdruck vorhanden, der beim Öffnen des Entlüftungsventils entweicht, und fällt der gemessene Istdruck dabei um mehr als den vorgegebenen Grenzwert ab, so wird das Bezugsdrucksignal unverändert beibehalten, und für das Adaptivdrucksignal wird als neuer Anfangswert ebenfalls das "alte" Bezugsdruckniveau festgesetzt. Wird mehrmals hintereinander eine derartige Restdruckentlüftung festgestellt, so ist mit relativ großer Sicherheit davon auszugehen, dass tatsächlich eine Störung des Bremssystems vorliegt, und es wird ein Warnsignal erzeugt.

Mit der Erfindung werden u.a. folgende Vorteile erreicht:

- Es kann bereits ein geringer Restdruck erkannt werden.

- Die Restdrucküberwachung erfolgt permanent bei während ungebremster Fahrt, wodurch ein entstehender Restdruck erkannt werden kann, bevor eine Überhitzung der Bremse auftritt.

- Eine Detektierung von Restdruck ist in allen Fällen möglich, d.h. sowohl bei schlagartiger als auch schleichender Restdruckentstehung über einen längeren Zeitraum.

- Die zusätzliche Belastung des Entlüftungsventils ist sehr gering, da die Anzahl zusätzlicher Betätigungen gering ist.

- Die Restdrucküberwachung kann zur Unterstützung des Drucksensor-Offset-Abgleichs verwendet werden.

Die Erfindung hat einen sehr breiten Einsatzbereich und ist allgemein dann anwendbar, wenn:

- eine Größe eines technischen Systems von verschiedenen Einflussgrößen abhängig ist;

- jederzeit detektierbar sein soll, ob eine Änderung der Größe durch eine bestimmte Einflussgröße bewirkt wird;

- die Möglichkeit besteht, auf eine Größe einzuwirken und an der Wirkung zu erkennen, ob die vorangegangene Änderung der Größe durch eine bestimmte Einflussgröße hervorgerufen wurde;

- die Möglichkeit zur Einwirkung auf die Größe nur selten eingesetzt werden soll oder nur selten gegeben ist.

Im folgenden wird die Erfindung anhand eines Ausführungsbeispiels im Zusammenhang mit der Zeichnung näher erläutert. Es zeigen:

Fig. 1    einen Druckentlastungsvorgang im Normalbetrieb ohne Restdruck; und
Fig. 2    einen Druckentlastungsvorgang im Normalbetrieb mit Restdruck.

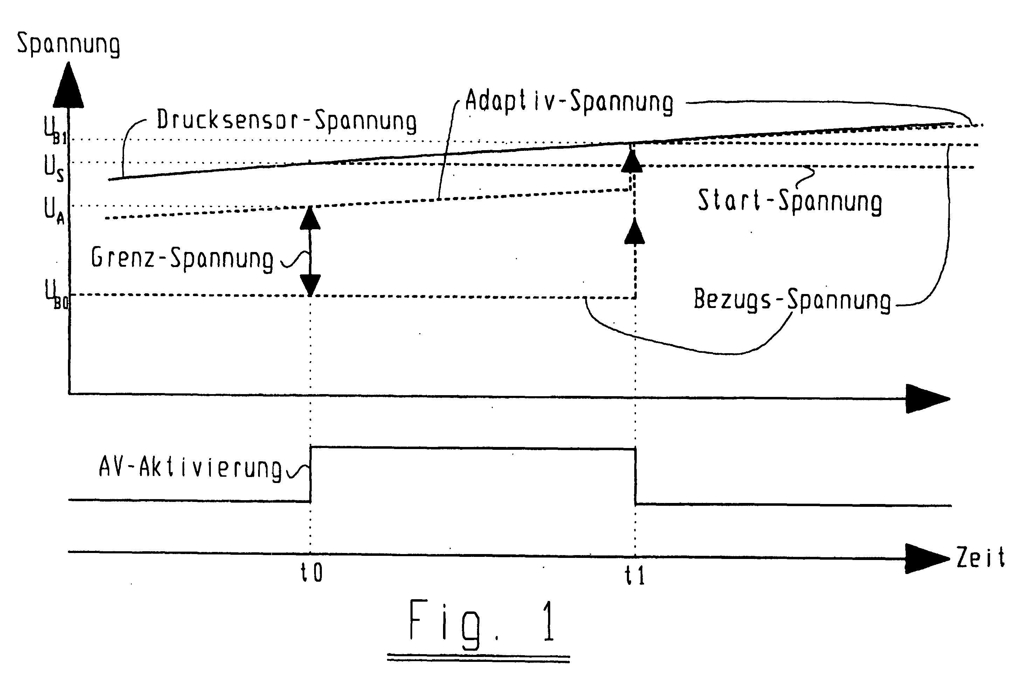

Fig. 1 zeigt im oberen Diagrammteil verschiedene Druckverläufe des Bremssystems in einer "Normalbetriebsphase" und im unteren Diagrammteil den Schaltzustand eines Auslassventils des Bremssystems, wobei die Öffnung des Auslassventils zum Zeitpunkt t0, das Offenbaren in der Zeitspanne [t0, t1] und das Schließen zum Zeitpunkt t1 erfolgt.

Sämtliche Drucksignale werden hier als elektrische Spannungssignale gemessen und verarbeitet.

Vor der in Fig. 1 beschriebenen Normalbetriebsphase erfolgt eine Initialisierungsphase, z.B. jedesmal vor Fahrtbeginn bzw. beim Einschalten der Zündung. Zur Initialisierung des Restdrucküberwachungssystems wird das Auslassventil für eine begrenzte Zeit geöffnet, d.h. die Steuerkammer wird entlüftet. Zu Beginn der Öffnungszeit wird die Drucksensor-Spannung als Start-Spannung gespeichert. Anschließend wird geprüft, ob der Istdruck, d.h. die Drucksensor-Spannung unter einen Spannungswert "Start-Spannung abzüglich einer Grenzspannung" abfällt. Die Grenzspannung ist eine vorgegebene Spannung,.die einem Druck entspricht, oberhalb dem Restdrücke erkannt werden können.

Wenn kein Restdruck vorhanden ist, sinkt die Drucksensor-Spannung beim Öffnen des Auslassventils nicht bzw. nicht merklich ab, d.h. es gilt:

Drucksensor-Spannung > Start-Spannung - Grenzspannung.

Das Auslassventil wird nach einer vorgegebenen maximalen Öffnungszeit geschlossen. Die Drucksensor-Spannung am Ende der Öffnungszeit wird als Bezugsspannung $U_{B0}$ (Fig. 1) gespeichert. Die Bezugsspannung $U_{B0}$ ist also die Spannung ohne Restdruck zum Zeitpunkt der Betätigung des Auslassventils am Ende der Initialisierungsphase. Des weiteren wird eine sich zeitlich verändernde Adaptivspannung gebildet, deren Anfangswert auf den Wert der Bezugsspannung $U_{B0}$ festgesetzt wird. Es gilt also:

Bezugsspannung $U_{B0}$ = Drucksensor-Spannung am Ende der Öffnungszeit und
Anfangswert der Adaptivspannung = Bezugsspannung $U_{B0}$.

Falls ein Restdruck vorhanden ist, sinkt die Drucksensor-Spannung beim Öffnen des Auslassventils (merklich) ab, d.h. es gilt:

Drucksensor-Spannung < Start-Spannung - Grenzspannung.

Das Auslassventil wird bei einem Druckabfall, der mindestens gleich der Grenzspannung entspricht, geschlossen. Es wird festgelegt:

- Bezugsspannung = Drucksensor-Spannung - Grenzspannung

- Adaptivspannung = Bezugsspannung.

Die geringe Bezugsspannung ermöglicht weitere Auslassventilbetätigungen, die ggf. zur Fehlererkennung führen.

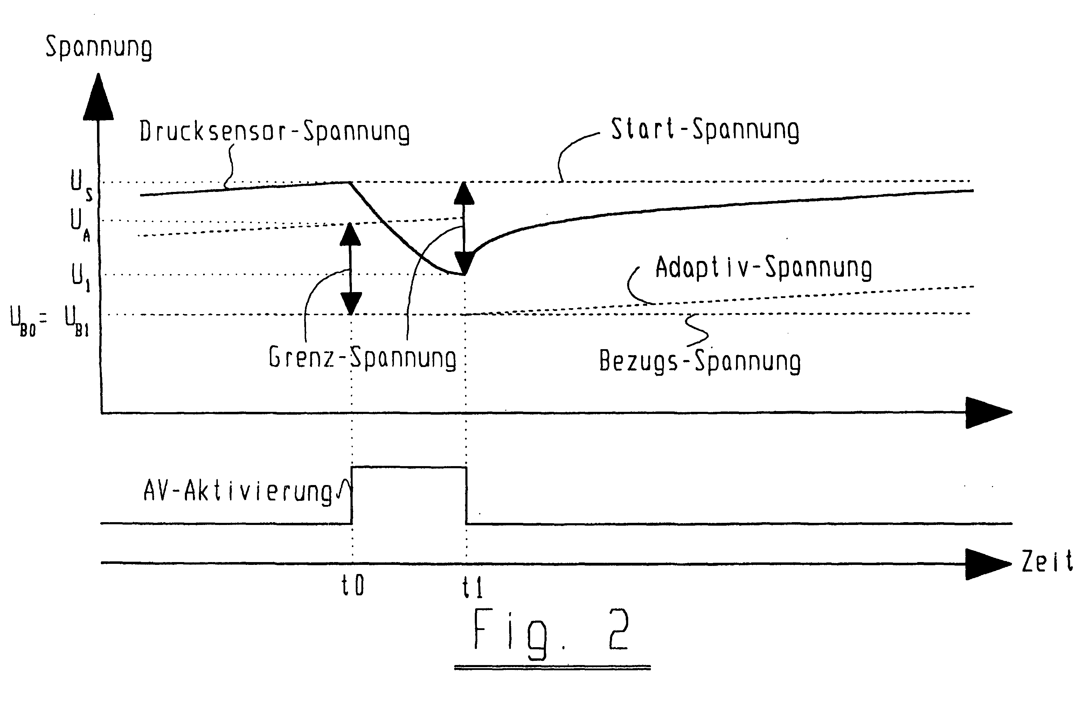

Im Anschluss an die Initialisierungsphase erfolgt die Normalbetriebsphase, die in den Figuren 1 und 2 beschrieben ist. Die Adaptivspannung wird ständig gefiltert der Drucksensor-Spannung nachgeführt. Die Drucksensor-Spannung kann sich aus verschiedenen Gründen ändern, beispielsweise infolge von Änderungen der Umgebungsbedingungen und insbesondere infolge eines sich aufbauenden Restdrucks. Es wird ständig überwacht, ob die Adaptivspannung um die Grenzspannung höher liegt als die Bezugsspannung. Wenn die Bezugsspannung und die Adaptivspannung auseinanderlaufen und gilt:

Adaptivspannung = Bezugsspannung + Grenzspannung, dann besteht ein Verdacht auf Restdruck. Die aktuell vorhandene Drucksensor-Spannung wird als Start-Spannung gespeichert, und anschließend wird das Auslassventil betätigt.

Es kann nun sein, dass ein Restdruck vorhanden ist oder nicht.

a) Kein Restdruck vorhanden

Die Drucksensor-Spannung sinkt während der Öffnungszeit [t0, t1] des Auslassventils nicht (wesentlich) ab, d.h. es gilt:

$$\text{Drucksensor-Spannung} > \text{Start-Spannung} - \text{Grenzspannung.}$$

Bei Erreichen der maximalen Öffnungszeit [t1 - t0] wird das Auslassventil wieder geschlossen. Die Drucksensor-Spannung am Ende der Öffnungszeit wird als neue Bezugsspannung $U_{B1}$ festgesetzt. Dementsprechend wird auch ein neuer Anfangswert für die Adaptivspannung festgesetzt, der gleich der neuen Bezugsspannung $U_{B1}$ ist. Es gilt also:

Bezugsspannung = Drucksensor-Spannung am Ende der Öffnungszeit

Adaptivspannung = Bezugsspannung.

Damit ist die Bezugsspannung auf die momentane Drucksensor-Spannung ohne Restdruck angepasst.

b) Restdruck vorhanden (Fig. 2)

Die Drucksensor-Spannung sinkt während der Öffnungszeit [t1 - t0] merklich ab, d.h. es gilt:

Drucksensor-Spannung < Start-Spannung $U_S$ - Grenzspannung ($U_S$ - $U_1$).

Sobald die Drucksensor-Spannung um mindestens die Grenzspannung abgefallen ist, d.h. bei Erreichen der Spannung $U_1$ wird das Auslassventil geschlossen. Es wird festgelegt:

Bezugsspannung bleibt unverändert, d.h. $U_{B0} = U_{B1}$

Anfangswert der Adaptivspannung = Bezugsspannung.

Die unveränderte Bezugsspannung ermöglicht weitere Betätigungen des Auslassventils, die möglicherweise zu einer erneuten Bestätigung der Fehlererkennung führen. Nach einer gewissen vorgebbaren Anzahl von Betätigungen des Auslassventils, bei denen eine Restdruckentlüftung stattfindet, kann mit hoher Wahrscheinlichkeit darauf geschlossen werden, dass tatsächlich ein Restdruckfehler im Bremssystem vorliegt. Hierbei ist zu beachten, dass die Zeit von der ersten fehlererkennenden Betätigung des Auslassventils bis zu einer Fehlermeldung hinreichend kurz gewählt ist, um eine Überhitzung der Bremse zu vermeiden.

**Patentansprüche**

1. Verfahren zum Detektieren von Restdruck in einem Bremssystem, insbesondere in einem Bremszylinder, **gekennzeichnet durch** folgende Schritte:

   1.1) Feststellen eines Verdachts auf Restdruck, wenn eine Differenz zwischen einem Adaptivdrucksignal, dessen zeitlicher Verlauf einem sensierten Istdruckverlauf qualitativ nachgeführt ist, und einem zeitlich zurückliegend gemessenen Istdruck ($U_{B0}$, $U_{B1}$) einen vorgegebenen Grenzwert ($U_A$ - $U_{B0}$) überschreitet, und

   1.2) Überprüfen des Verdachts auf Restdruck **durch** Betätigen eines Druckentlastungsorgans des Bremssystems und Überwachen eines ggf, auftretenden Abfalls des sensierten Istdrucks.

2. Verfahren nach Anspruch 1, **gekennzeichnet durch** folgende Schritte:

   a) Sensieren des Istdrucks im Bremssystem und Erzeugen eines entsprechenden Istdrucksignals,
   b) Öffnen des Druckentlastungsorgans,
   c) Schließen des Druckentlastungsorgans und Speichern des beim Schließen gemessenen Istdrucks als Bezugsdrucksignal ($U_{B0}$, $U_{B1}$),
   d) Erzeugen des Adaptivdrucksignals, dessen Signalverlauf **durch** ständiges Filtern des Verlaufs des Istdruckssignals gebildet wird, wobei beim Schließen des Druckentlastungsventils das Adaptivdrucksignal auf einen Anfangswert gesetzt wird, der gleich dem des Bezugsdrucksignals ($U_{B0}$, $U_{B1}$) ist,
   e) Überwachen der Differenz zwischen dem Bezugsdrucksignal ($U_{B0}$, $U_{B1}$) und dem Adaptivdrucksignal und emeutes Öffnen des Druckentlastungsventils, wenn die Differenz größer als der Grenzwert ($U_A$ - $U_{B0}$) ist,

f) Speichern des beim erneuten Öffnen gemessenen Istdrucks als Startdrucksignal (Us),

g) Feststellen, dass kein Restdruck vorhanden ist, wenn nach dem erneuten Öffnen gilt:

Istdrucksignal > Startdrucksignal ($U_S$) - Grenzwert ($U_A$ - $U_{B0}$),

und

Feststellen, dass ein Restdruck vorhanden ist, wenn nach dem erneuten Öffnen gilt

Istdrucksignal < Startdrucksignal ($U_S$) - Grenzwert ($U_A$ - $U_{B0}$).

3. Verfahren nach Anspruch 2, **dadurch gekennzeichnet, dass** die Zeitdauer (t1 - t0) zwischen dem Öffnen in Schritt b) und dem Schließen in Schritt c) eine konstante, fest vorgegebene Zeitdauer ist.

4. Verfahren nach einem der Ansprüche 2 oder 3, **dadurch gekennzeichnet, dass** nach Schritt g) das Druckentlastungsorgan erneut geschlossen wird und die Schritte c)-g) erneut durchgeführt werden, wenn zuvor in Schritt g) festgestellt wurde, dass kein Restdruck vorhanden ist.

5. Verfahren nach Anspruch 4, **dadurch gekennzeichnet, dass** das erneute Schließen des Druckentlastungsorgans erfolgt, wenn der Istdruck um mindestens den Grenzwert ($U_A$ - $U_{B0}$) abgesunken ist bzw. nach einer fest vorgegebenen Zeitdauer, wenn der Istdruck bis zu deren Ablauf um weniger als den Grenzwert ($U_A$ - $U_{B0}$) abgesunken ist.

6. Verfahren nach einem der Ansprüche 2 bis 5, **dadurch gekennzeichnet, dass**, wenn in Schritt g) ein Restdruck festgestellt wurde, das Bezugsdrucksignal ($U_{B0}$, $U_{B1}$) unverändert gehalten wird und die Schritte d)-g) erneut durchgeführt werden.

7. Verfahren nach einem der Ansprüche 2 bis 6, **dadurch gekennzeichnet, dass** ein Restdruckwarnsignal erzeugt wird, wenn eine vorgegebene Anzahlmal gemäß Schritt g) ein Restdruck festgestellt wurde.

8. Verfahren nach einem der Ansprüche 1 bis 7, **dadurch gekennzeichnet, dass** der Druck im Bremssystem durch einen Drucksensor sensiert wird, der als Ausgangssignal eine elektrische Spannung liefert, und dass sämtliche zu verarbeitende Drucksignale und der Grenzwert ($U_A$ - $U_{B0}$) als elektrische Spannungssignale verarbeitet werden.

9. Verfahren nach einem der Ansprüche 2 bis 8, **dadurch gekennzeichnet, dass** Schritt a) bei ungebremster Fahrt ständig durchgeführt wird.

10. Verfahren nach einem der Ansprüche 2 bis 9, **dadurch gekennzeichnet, dass** die Schritte b) und c) in einer Initialisierungsphase durchgeführt werden.

11. Verfahren nach einem der Ansprüche 1 bis 10, **dadurch gekennzeichnet, dass** die Schritte d)-g) in einer Normalbetriebsphase durchgeführt werden.

12. Verfahren nach einem der Ansprüche 1 bis 11, **dadurch gekennzeichnet, dass** das Druckentlastungsorgan ein Auslassventil ist, das einem Druckregelmodul der Bremsanlage zugeordnet ist.

**Claims**

1. Method of detecting residual pressure in a brake system, in particular in a brake cylinder, **characterised by** the following steps:

1.1) detecting a suspected residual pressure when a difference between an adaptive pressure signal, whose development in time is caused to follow a sensed actual development of pressure in terms of quality, and an actual pressure ($U_{B0}$, $U_{B1}$) measured during a preceding interval, exceeds a predetermined threshold ($U_A$ - $U_{B0}$), and

1.2) verifying the suspected residual pressure by operation of a pressure relief element of the brake system and monitoring a possibly occurring drop of the sensed actual pressure.

**2.** Method according to Claim 1, **characterised by** the following steps:

(a) sensing the actual pressure in the brake system and generating a corresponding actual pressure signal,

(b) opening said pressure relief element,

(c) closing said pressure relief element and storing the actual pressure measured by the time of closing as reference pressure signal ($U_{B0}$, $U_{B1}$),

(d) generating said adaptive pressure signal whose development in time is created by continuous filtering of the development in time of said actual pressure signal, with said adaptive pressure signal being set to an initial value when said pressure relief valve is closed, which initial value equals the value of said reference pressure signal ($U_{B0}$, $U_{B1}$),

(e) monitoring the difference between said reference pressure signal ($U_{B0}$, $U_{B1}$) and said adaptive pressure signal and opening said pressure relief valve again when said difference exceeds said threshold value ($U_A - U_{B0}$),

(f) storing said actual pressure as starting pressure signal ($U_S$), which was measured when said pressure relief valve is opened again,

(g) detecting the state that residual pressure is not presence if the following relationship applies after said pressure relief valve has been opened again:

actual pressure signal > starting pressure signal ($U_S$) - threshold value ($U_A - U_0$),

and

detecting that residual pressure is present if the following relationship applies after said pressure relief valve has been opened again:

actual pressure signal < starting pressure signal ($U_S$) - threshold value ($U_A - U_0$).

**3.** Method according to Claim 2, **characterised in**
**that** the period (t1 - t0) between the opening operation in step (b) and the closing operation in step (c) is a constant, invariably predetermined period of time.

**4.** Method according to any of the Claims 2 or 3, **characterised in**
**that** after step (g), said pressure relief element is closed again and that said steps (c) - (g) are carried out again if it had been established before in step (g) that residual pressure is not present.

**5.** Method according to Claim 4, **characterised in**
**that** the repeated closing of said pressure relief element is carried out when the actual pressure has dropped by at least said threshold value ($U_A - U_{B0}$) or after an invariably predetermined period when the actual pressure has dropped by less than said threshold value ($U_A - U_{B0}$) up to the expiration of said predetermined interval.

**6.** Method according to any of the Claims 2 to 5, **characterised in**
**that** said reference pressure signal (UB0, UB1) is maintained unvaried and the steps (d) - (g) are carried out again if residual pressure has been established in step (g).

**7.** Method according to any of the Claims 2 to 6, **characterised in**
**that** a residual pressure warning signal is generated when residual pressure has been established for a predetermined number of times according to step (g).

**8.** Method according to any of the Claims 1 to 7, **characterised in**
**that** the pressure in the brake system is sensed by means of a pressure sensor that furnishes an electrical voltage as output signal, and that all the pressure signals to be processed and said threshold value ($U_A - U_{B0}$) are processed as electrical voltage signals.

**9.** Method according to any of the Claims 2 to 8, **characterised in**
**that** step (a) is carried out permanently when driving without brake application.

**10.** Method according to any of the Claims 2 to 9, **characterised in**
**that** the steps (b) and (c) are carried out in an initialising phase.

**11.** Method according to any of the Claims 1 to 10, **characterised in**
**that** the steps (d) - (g) are carried out in a normal operating phase.

**12.** Method according to any of the Claims 1 to 11, **characterised in
that** said pressure relief element is a discharge valve that is associated with a pressure regulator module of the brake system.

**Revendications**

**1.** Procédé à détecter une pression résiduelle dans un système de freinage, en particulier dans un cylindre de freinage, **caractérisé par** les opérations suivantes :

1.1) détecter une pression résiduelle soupçonnée quand une différence entre un signal de pression adaptif, dont le gradient en temps este causé à suivre un gradient actuel détecté de la pression en qualité, et une pression actuelle ($U_{B0}$, $U_{B1}$) mesurée au cours d'un intervalle précédant, dépasse un seuil prédéterminé ($U_A$ - $U_{B0}$), et

1.2) vérifier la pression résiduelle soupçonnée par l'opération d'un organe détendeur de pression du système de freinage et surveiller une chut de la pression actuelle détectée, qui apparaît éventuellement.

**2.** Procédé selon la revendication 1, **caractérisé par** les opérations suivantes :

(a) détecter la pression actuelle dans le système de freinage et engendrer un signal correspondant de pression actuelle,

(b) ouvrir ledit organe détendeur de pression,

(c) fermer ledit organe détendeur de pression et mettre en mémoire la pression actuelle mesurée au temps de fermeture en tant que signal de pression de référence ($U_{B0}$, $U_{B1}$),

(d) engendrer ledit signal de pression adaptif, dont le gradient en temps est créé par filtrage en continu du gradient en temps dudit signal de pression actuelle, au signal de pression adaptif étant ajusté à une valeur de départ, quand ladite soupape de détente de la pression est fermée, cette valeur de départ étant égale à la valeur dudit signal de pression de référence ($U_{B0}$, $U_{B1}$),

(e) surveiller la différence entre ledit signal de pression de référence ($U_{B0}$, $U_{B1}$) et ledit signal de pression adaptif, et ouvrir ladite soupape de détente de pression encore une fois, quand ladite différence dépasse ladite valeur de seuil ($U_A$ - $U_{B0}$),

(f) mettre en mémoire ladite pression actuelle en tant que signal d'amarrage de départ ($U_S$), qui était mesuré, quand ladite soupape de détente de pression s'ouvre de nouveau,

(g) détecter la condition, où la pression résiduelle n'est pas présente, si la relation suivante s'applique après l'ouverture nouvelle de ladite soupape de détente de pression :

signal de pression actuelle > signal de pression de départ ($U_S$) - valeur de seuil ($U_A$ - $U_0$),

et

détecter, que la pression résiduelle est présente, si la relation suivante s'applique après l'ouverture nouvelle de ladite soupape de détente de pression :

signal de pression actuelle < signal de pression de départ ($U_S$) - valeur de seuil ($U_A$ - $U_0$).

**3.** Procédé selon la revendication 2, **caractérisé en ce
que** la période (t1 - t0) entre l'opération d'ouverture dans l'étape (b) et l'opération de fermeture dans l'étape (c) est une période constante prédéterminée de façon non variable.

**4.** Procédé selon une quelconque des revendications 2 ou 3, **caractérisé en ce
qu'**après l'étape (g), ledit organe détendeur de pression est fermé de nouveau, et en ce que lesdites étapes (c) - (g) sont réalisées encore une fois, s'il était établi avant, dans l'étape (g), qu'une pression résiduelle n'est pas présente.

**5.** Procédé selon la revendication 4, **caractérisé en ce
que** la fermeture nouvelle dudit organe détendeur de pression est réalisée, quand il y avait une chute de la pression actuelle par au moins ladite valeur de seuil ($U_A$ - $U_{B0}$) ou après une période prédéterminée de façon non variable, quand il y avait une chute de la pression actuelle par moins de la valeur de seuil ($U_A$ - $U_{B0}$) jusqu'à la fin dudit intervalle prédéterminé.

**6.** Procédé selon une quelconque des revendications 2 à 5, **caractérisé en ce
que** ledit signal de pression de référence (UB0, UB1) est maintenu en état non varié, et en ce que les étapes (d) - (g) sont réalisées encore une fois, si la pression résiduelle était établie dans l'étape (g).

7. Procédé selon une quelconque des revendications 2 à 6, **caractérisé en ce qu'**un signal d'alarme de pression résiduelle est engendré, quand une pression résiduelle était établie pour un nombre prédéterminé de fois selon l'étape (g).

8. Procédé selon une quelconque des revendications 1 à 7, **caractérisé en ce que** la pression dans le système de freinage est détecté moyennant un détecteur de pression, qui fournit une tension électrique en tant que signal de sortie, et en ce que tous les signaux de pression à traiter et ladite valeur de seuil ($U_A$ - $U_{B0}$) sont traités en tant que signaux de tension électrique.

9. Procédé selon une quelconque des revendications 2 à 8, **caractérisé en ce que** l'étape (a) est réalisé en permanence, en marche sans serrage du frein.

10. Procédé selon une quelconque des revendications 2 à 9, **caractérisé en ce que** les étapes (b) et (c) sont réalisées dans une phase d'initialisation.

11. Procédé selon une quelconque des revendications 1 à 10, **caractérisé en ce que** les étapes (d) - (g) sont réalisées dans une phase de service normal.

12. Procédé selon une quelconque des revendications 1 à 11, **caractérisé en ce que** ledit organe détendeur de pression est une soupape de décharge, qui est affectée à un module régulateur de pression du système de freinage.

Fig. 1

EP 1 409 306 B1

Fig. 2